# EUROPÄISCHE PATENTANMELDUNG

(11) **EP 2 322 681 A1**
(43) Veröffentlichungstag der Anmeldung: **18.05.2011**
(21) Anmeldenummer: 09014132.6
(22) Anmeldetag: 11.11.2009
(51) Int. Cl.: C22F 1/10, C23C 10/60, C23C 10/28, C30B 33/02

(54) **Verfahren zur Vermeidung von Rekristallisierung durch Alitierung**

(71) Anmelder: Siemens Aktiengesellschaft, 80333 München (DE)
(72) Erfinder: Ott, Michael, 45470 Mülheim an der Ruhr (DE)

(57) **Zusammenfassung**

Zur Verhinderung der Bildung von Sekundärkörnern bei der Wärmebehandlung eines Bauteils aus einer Nickelbasis-Superlegierung findet eine Alitierung statt, um die Starttemperatur zur RX-Bildung deutlich zu erhöhen.

## Beschreibung

Die Erfindung betrifft ein Verfahren zur Behandlung von Nickelbasis-Superlegierungen, die gerichtet erstarrt sind, um bei einer nachfolgenden Behandlung die Entstehung von Sekundärkörnern (RX-Bildung) zu vermeiden.

Moderne einkristalline oder kolumnar erstarrte Gasturbinenkomponenten mit Substraten aus Nickelbasis-Superlegierungen werden bei der Neuherstellung oder im Refurbishment, d.h. der Wiederaufarbeitung von gebrauchten Turbinenschaufeln, Wärmebehandlungen unterzogen.
Bei diesen Wärmebehandlungen kommt es oft zu einer Bildung von Sekundärkörnern, d.h. zumindest einem zusätzlichen Korn mit einer anderen Ausrichtung gegenüber den einkristallinen oder kolumnaren Körnern im Substrat.

Dies muss vermieden werden, da dies eine mögliche mechanische Schwachstelle darstellen könnte.

Es ist daher Aufgabe der Erfindung oben genanntes Problem zu lösen.

Die Aufgabe wird gelöst durch ein Verfahren gemäß Anspruch 1, in dem durch eine Vorbehandlung diese Temperatur (RX-Starttemperatur), ab der die unerwünschte Rekristallisierung beginnt, erhöht wird.

In den Unteransprüchen sind weitere vorteilhafte Maßnahmen aufgelistet, die beliebig miteinander kombiniert werden können, um weitere Vorteile zu erzielen.

Es zeigen:
- Figur 1: eine Turbinenschaufel und

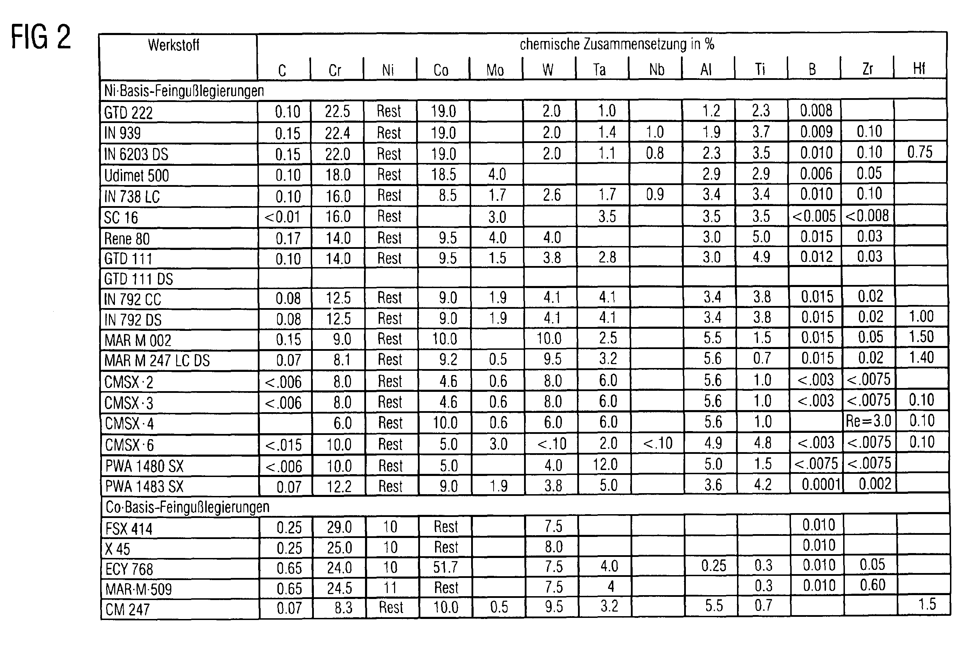

- Figur 2: eine Liste von Superlegierungen.

Die Beschreibung und die Figuren stellen nur Ausführungsbeispiele der Erfindung dar.

Jedes gerichtet erstarrte Bauteil weist je nach der chemischen Zusammensetzung, aufgrund von Eigendruckspannungen, durch Korngrenzen, durch Oxidation oder Risse eine bestimmte Temperatur auf, ab der sich Sekundärkörner bilden, der RX-Starttemperatur.

Vor dem Hochtemperaturlöten oder Schweißen werden gerichtet erstarrte Bauteile 120, 130, insbesondere wenn sie nach einem Einsatz wiederaufgearbeitet werden, einer FIC-Reinigung (Fluorid-Ion-Cleaning) unterworfen. Bei dieser Art von Reinigung werden Oxid- und Korrosionsbelege aus Rissen und/oder von der Bauteiloberfläche entfernt.
Man hat beobachtet, dass nach einer solchen FIC-Behandlung die RX-Starttemperatur, d.h. die Temperatur, ab der sich unerwünschte Sekundärkörner bilden, um bis zu 30°C herabgesetzt ist. Dies schränkt mögliche nachfolgende Wärmebehandlungen oder folgenden Behandlungsschritte ein, weil sich ansonsten unerwünschte Sekundärkörner im Einkristall bilden, die die mechanische Fertigkeit des Bauteils reduzieren.

Daher wird vor dieser Wärmebehandlung oder anderen Behandlungen, die bei hohen Temperaturen erfolgt, eine Alitierung durchgeführt, insbesondere durch eine Diffusionsbehandlung. Zur Alitierung können bekannte Verfahren aus dem Stand der Technik verwendet werden. Die Alitierung kann bei einer Temperatur deutlich unterhalb der erniedrigten RX-Starttemperatur durchgeführt werden.

Durch die Alitierung wird die RX-Starttemperatur wieder erhöht und ermöglicht die Wärmebehandlung von gerichtet erstarrten Nickelbasis-Superlegierungen beim Löten und Schweißen oder für eine Gefügeerholungsglühung ohne Bildung von Sekundärkörnern.

Die γ'-Phase wird durch die Alitierung wieder neu gebildet.

Die Tiefe der Alitierung beträgt vorzugsweise mindestens 100µm.

Die Alitierung erfolgt bevorzugt in Bereichen in die durch Vorbehandlungen mechanische Spannungen eingebracht wurden, vorzugsweise der Schaufelfuß.
Lokale Alitierung ist also allgemein bevorzugt.

Nach der Wärmebehandlung kann auch eine Beschichtung der Fläche oder des Bauteils 120, 130 erfolgen.

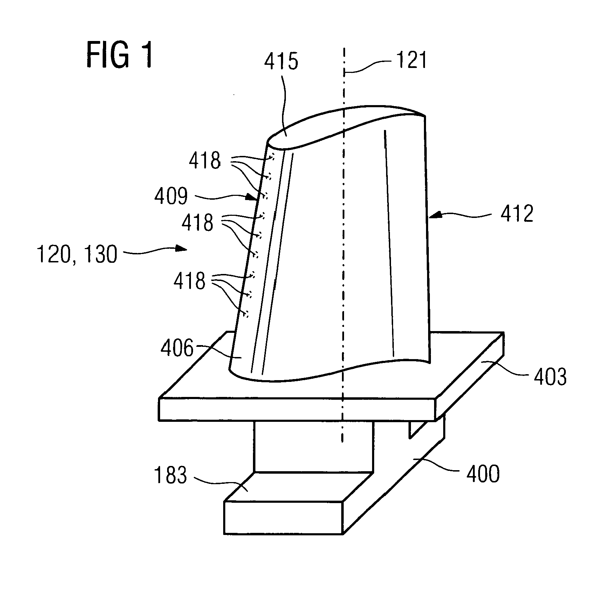

Die Figur 1 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 und eine Schaufelspitze 415 auf.
Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).
Der Schaufelfuß 183 ist beispielsweise als Hammerkopf ausgestaltet. Andere Ausgestaltungen als Tannenbaum- oder Schwalbenschwanzfuß sind möglich.

Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.
Solche Superlegierungen sind beispielsweise aus der EP 1 204 776 B1, EP 1 306 454, EP 1 319 729 A1, WO 99/67435 oder WO 00/44949 bekannt.
Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.
Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.
Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.

Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).
Solche Verfahren sind aus der US-PS 6,024,792 und der EP 0 892 090 A1 bekannt.

Ebenso können die Schaufeln 120, 130 Beschichtungen gegen Korrosion oder Oxidation aufweisen, z. B. (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1.
Die Dichte liegt vorzugsweise bei 95% der theoretischen Dichte.
Auf der MCrAlX-Schicht (als Zwischenschicht oder als äußerste Schicht) bildet sich eine schützende Aluminiumoxidschicht (TGO = thermal grown oxide layer).

Vorzugsweise weist die Schichtzusammensetzung Co-30Ni-28Cr-8Al-0,6Y-0,7Si oder Co-28Ni-24Cr-10Al-0,6Y auf. Neben diesen kobaltbasierten Schutzbeschichtungen werden auch vorzugsweise nickelbasierte Schutzschichten verwendet wie Ni-10Cr-12Al-0,6Y-3Re oder Ni-12Co-21Cr-11Al-0,4Y-2Re oder Ni-25Co-17Cr-10Al-0,4Y-1,5Re.

Auf der MCrAlX kann noch eine Wärmedämmschicht vorhanden sein, die vorzugsweise die äußerste Schicht ist, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Die Wärmedämmschicht bedeckt die gesamte MCrAlX-Schicht.

Durch geeignete Beschichtungsverfahren wie z.B. Elektronenstrahlverdampfen (EB-PVD) werden stängelförmige Körner in der Wärmedämmschicht erzeugt.
Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen. Die Wärmedämmschicht ist also vorzugsweise poröser als die MCrAlX-Schicht.

Wiederaufarbeitung (Refurbishment) bedeutet, dass Bauteile 120, 130 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse im Bauteil 120, 130 repariert. Danach erfolgt eine Wiederbeschichtung des Bauteils 120, 130 und ein erneuter Einsatz des Bauteils 120, 130.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

## Patentansprüche

1. Verfahren zur Erhöhung der Starttemperatur der Rekristallation (RX) von gerichtet erstarrten Bauteilen aus Nickelbasissuperlegierungen,
bei dem das Bauteil (1, 120, 130) zuerst einer Alitierung unterworfen wird und
dann eine Wärmbehandlung bei höheren Temperaturen als der Temperatur der Alitierung durchgeführt wird.

2. Verfahren nach Anspruch 1,
bei dem die Wärmbehandlung ein Lötverfahren darstellt.

3. Verfahren nach Anspruch 1 oder 2,
bei dem die Wärmbehandlung eine Gefügeerholungsglühung darstellt.

4. Verfahren nach Anspruch 1, 2 oder 3,
bei dem das Bauteil (120, 130) ein gebrauchtes Bauteil darstellt,
das von Korrosionsprodukten, insbesondere von Oxiden, gereinigt wurde.

5. Verfahren nach Anspruch 1, 2, 3, 4,
bei dem das Bauteil (120, 130) durch eine Fluoridionreinigung vor der Alitierung gereinigt wurde.

6. Verfahren nach Anspruch 1, 2, 3, 4 oder 5,
bei dem die Alitierung eine Tiefe bis 200µm in dem Bauteil (1, 120, 130) erzielt.

7. Verfahren nach Anspruch 1, 2, 3, 4, 5 oder 6,
bei dem die Alitierung lokal durchgeführt wird.

8. Verfahren nach Anspruch 1, 2, 3, 4, 5, 6 oder 7,
bei dem das Verfahren bei einkristallinen Bauteilen (120, 130) angewendet wird.

9. Verfahren nach Anspruch 1, 2, 3, 4, 5, 6 oder 7,
bei dem das Verfahren bei Bauteilen (120, 130) mit kolumnaren Körnern durchgeführt wird.

10. Verfahren nach Anspruch 1, 2, 3, 4, 5, 6, 7 oder 8, bei dem nach der Wärmebehandlung eine Beschichtung erfolgt.
